# EUROPÄISCHE PATENTSCHRIFT

(11) **EP 0 500 541 B1**
(45) Veröffentlichungstag und Bekanntmachung des Hinweises auf die Patenterteilung: **28.07.1993**
(21) Anmeldenummer: 90913198.9
(22) Anmeldetag: 05.09.1990
(51) Int. Cl.: A61C 17/02, A61C 17/16

(54) **ELEKTRISCH BETRIEBENES GERÄT ZUR MUNDPFLEGE**
ELECTRICALLY POWERED MOUTH-CARE DEVICE
APPAREIL ELECTRIQUE POUR LES SOINS DE LA BOUCHE

(30) Priorität: 14.11.1989 DE 3937875
(43) Veröffentlichungstag der Anmeldung: 02.09.1992
(73) Patentinhaber: Braun Aktiengesellschaft, Frankfurt am Main (DE)
(72) Erfinder: PÄCHER, Lothar, D-6500 Mainz 1 (DE); GASSNER, Gustav, D-6230 Frankfurt am Main 80 (DE); VOIGT, Gottfried, D-6000 Frankfurt am Main 56 (DE); HILFINGER, Peter, D-6380 Bad Homburg (DE)
(74) Vertreter: Vorbeck, Wolfgang Ernst August, Dr.
(86) Internationale Anmeldenummer: DE9000674
(87) Internationale Veröffentlichungsnummer: WO9107144

(56) Entgegenhaltungen:
- EP-A- 0 025 456
- DE-A- 3 101 941
- DE-A- 3 601 617
- DE-C- 3 143 196
- GB-A- 1 264 138

## Beschreibung

Die Erfindung geht aus von einer Munddusche mit einer Basiseinheit, welche eine Pumpeneinheit zur Förderung einer Flüssigkeit und eine elektrische Steuerung der Pumpeneinheit umfaßt, und mit einem Handstück, welches über einen Schlauch und Leiter mit der Basiseinheit verbunden ist, wobei das Handstück eine Flüssigkeitsaustrittsöffnung und ein Betätigungsmittel zur Variation der Fördermenge der Pumpeneinheit aufweist.

Aus der DE 3601617 A ist bereits eine Munddusche bekannt, bei der am Handstück ein Betätigungsmittel vorgesehen ist, mit dem die Fördermenge der Pumpeneinheit variierbar ist. Dieses Betätigungsmittel wirkt auf eine mechanische Steuereinrichtung ein, mit der die von der Pumpeneinheit gelieferte Flüssigkeit auf zwei verschiedene Austrittskanäle der Munddusche gelenkt werden kann. Der eine Austrittskanal weist eine Einstrahldüse und der andere Austrittskanal eine Mehrstrahldüse auf.

Dieses Betätigungsmittel ist somit recht kompliziert aufgebaut und aufwendig in der Herstellung. Darüber hinaus ist diese Munddusche nicht zur Einhandbetätigung geeignet, da das Gerät nicht mittels des Betätigungsmittels am Handgriff aus- bzw. einschaltbar ist.

Die DE 31 01 941 A1 offenbart eine Munddusche mit einem Schiebeschalter, der rein mechanisch zur Umschaltung von Einzelstrahlspritzung auf Mehrstrahlspritzung und zum Verschließen des Flüssigkeitszutrittskanals dient. Auch diese Lösung ist konstruktiv äußerst aufwendig und gewährleistet dennoch keine echte Einhandbedienung. Zwar kann in einer Stellung des Schiebeschalters der Flüssigkeitszutrittskanal der Munddusche geschlossen werden, so daß aus der Düse keine Flüssigkeit mehr austreten kann, doch ist ein weiterer Handgriff zum Abschalten des druckerzeugenden Mittels notwendig.

Ein weiteres Mundpflegegerät ist bereits aus der DE-A1 30 36 781 (hervorgegangen aus der internationalen Anmeldung mit der Veröffentlichungsnummer W0 80/01873) bekannt. Das Handstück dieser bekannten Mundpflegevorrichtung ist je nach dem verwendeten Anschlußteil als Zahnbürste oder als Munddusche verwendbar und über einen Schlauch mit wenigstens drei in der Schlauchwandung eingebetteten elektrischen Leitern an das Basisgerät angeschlossen. Je nachdem, ob auf das Griffteil eine Spritzdüse oder eine Zahnbürste aufgesetzt ist, wird entweder ein erster Antrieb zur Bewegung der elektrischen Zahnbürste oder ein zweiter Antrieb für eine Pumpe zum Aufbau eines vorbestimmten Wasserdrucks in Gang gesetzt. Mittels eines am Handgriff angeordneten Betätigungsmittels ist die Mundpflegevorrichtung ein- oder ausschaltbar.

Insbesondere dann, wenn das Mundpflegegerät als Munddusche eingesetzt wird, ist in aller Regel an der Basiseinheit ein Stellglied vorzusehen, mit dem der aus der Spritzdüse austretende Wasserstrahl bezüglich seiner Intensität verstellt werden kann, um den individuellen Wünschen des Benutzers gerecht zu werden. In der Regel stellt der Benutzer eine für seine Bedürfnisse angenehme oder medizinisch sinnvolle Spritzstärke der Spritzdüse am Basisgerät ein und beginnt mit der Reinigung der Zähne. Allerdings kann während der Reinigung häufig die Situation auftreten, daß festsitzende Speisereste in den Zahnzwischenräumen mit der vorgewählten Spritzstärke der Spritzdüse nicht entfernt werden können. Der Benutzer ist somit gezwungen, am Basisgerät die Spritzstärke, beispielsweise durch eine Erhöhung der Drehzahl der Pumpe kurzzeitig zu erhöhen, um diese dann nach Entfernung der festsitzenden Speisereste wieder auf den für ihn angenehmen Wert zu erniedrigen.

Es ist Aufgabe der Erfindung, eine Variation von Betriebsparametern des Mundpflegegerätes zu vereinfachen, um somit die Handhabung des Mundpflegegerätes zu erleichtern und zu verbessern. Insbesondere soll es durch Ausgestaltungen der Erfindung ermöglicht werden, daß mittels eines Betätigungsmittels am Handstück des Mundpflegegerätes Betriebsparatmeter des Mundpflegegerätes durch Einhandbedienung verstellt werden können. Das Betätigungsmittel soll für den speziellen Einsatz bei Mundpflegegeräten leicht zu reinigen sein und eine hohe Funktionssicherheit aufweisen. Schließlich ist es wünschenswert, zwischen dem Handstück und der Basiseinheit des Mundpflegegerätes eine möglichst geringe Anzahl elektrischer Leiter vorzusehen. Insbesondere beim Einsatz der Erfindung in Mundduschen, bei der die elektrischen Leiter bevorzugt in der Schlauchwandung des Wassertransportschlauches zwischen der Basiseinheit und dem Handstück untergebracht sind, führt die Verwendung von einer möglichst geringen Anzahl elektrischer Leiter zur Vorteilen bei der Herstellbarkeit, der Haltbarkeit und den Kosten des elektrisch leitenden Wasserschlauches.

Die Hauptaufgabe der Erfindung wird gelöst durch ein Gerät zur Mundpflege mit den eingangs genannten Merkmalen, bei dem mittels des Betätigungsmittels wenigstens zwei Schalter zur Beeinflussung der elektrischen Steuerung betätigbar sind, wobei der erste Schalter zum Ein-/Ausschalten der Pumpeneinheit und der zweite Schalter zur Einstellung eines bestimmten, voreingestellten, insbesondere maximalen Fördermengenwertes der Pumpeneinheit dient.

Durch diese Maßnahme wird in äußerst vorteilhafter Weise dafür gesorgt, daß der Benutzer mittels des Betätigungsmittels am Handstück zumindest zwei Funktionen des Gerätes durch eine Einhandbedienung steuern kann. Beispielsweise kann einerseits durch die beiden Schalter, insbesondere durch den Schaltschieber das Gerät ein- bzw. ausgeschaltet und mittels des Schalttasters, beispielsweise bei Mundduschen, die Spritzstärke für die Dauer der Betätigung des Schalttasters auf einen vorher festgelegten, von der Grundeinstellung abweichenden Wert verändert werden. Natürlich können auch andere Betriebsparameter als die Spritzstärke des Mundpflegegerätes, wie zum Beispiel die Pulsationsfrequenz eines Wasserstrahls der Munddusche oder sonstige Betriebszustände des Mundpflegegerätes verändert werden. Auf jeden Fall wird der Benutzer in die Lage versetzt, mittels eines Betätigungsmittels am Handstück des Mundpflegegerätes mehrere, das heißt wenigstens zwei Parameter zu variieren.

Dadurch, daß das Betätigungsmittel als der Krümmung einer Gehäusewand des Handstücks angepaßte, an der Gehäusewand geführte Platte ausgebildet ist, die mit sich über einen Teilbereich der Platte erstreckenden, parallel verlaufenden, schlitzförmigen Durchbrechungen versehen ist, wird ein baulich äußerst einfach gestaltetes Betätigungsmittel geschaffen, welches leicht zu reinigen und zu betätigen ist. Dadurch, daß der Bereich zwischen den Durchbrechungen dem Schalttaster und eine federelastische, an der Platte angeformte Zunge dem Schaltschieber zugeordnet ist, wird ein äußerst robustes, einfach herstellbares und montierbares und schnell zu reinigendes Betätigungsmittel zur Verfügung gestellt, welches wenigstens zwei Funktionen ausüben kann. Eine Funktion kann durch eine Verschiebung des Schaltschiebers, die zweite Funktion durch ein Drücken des Schalttasters, der durch die Federelastizität der Platte zwischen den beiden Schlitzen gebildet wird, betätigt werden. Die Maßnahme, daß der zweite Schalter mittels des Betätigungsmittels nur dann betätigbar ist, wenn das Betätigungsmittel eine Positionierung aufweist, in der die Pumpeneinheit mittels des ersten Schalters in den Ein-Zustand geschaltet ist, stellt in vorteilhafter Weise sicher, daß der zweite Betriebsparameter nur dann durch den Schalttaster variierbar ist, wenn der erste, durch die Schaltposition des Schaltschiebers festgelegte Betriebsparameter einen vorgegebenen Wert aufweist. Aufgrund diese Maßnahme wird verhindert, daß durch eine Betätigung des Schalttasters ein Betriebsparameter geändert wird, sofern sich der Schaltschieber in der Aus-Position befindet. Diese Ausgestaltung vereinfacht die Handhabung des Mundpflegegerätes in hohem Maße und macht sie zum Beispiel auch für Kinder ohne weiteres handhabbar. Durch Betätigung, beispielsweise des Schalttasters, kann die Spritzstärke des Strahls der Munddusche auf einen vorgegebenen, oberen Wert zur Entfernung von hartnäckig festsitzenden Schmutzresten in oder an den Zähnen erhöht werden. Nach Beendigung der Betätigung des Schalttasters wird die Spritzstärke selbsttätig auf einen Wert zurückstellt, der vom Benutzer an der Basiseinheit voreingestellt wurde. Dadurch, daß die Basisieinheit mit dem Handstück über nur zwei elektrische oder sonstige, insbesondere optische Leiter verbunden ist, die jedenfalls bei Mundduschen innerhalb der Schlauchwandungen des Schlauches zum Transport des Reinigungsmittels von der Basiseinheit zum Handstück verlegt sind, wird eine erhebliche Vereinfachung der Herstellbarkeit des elektrisch leitenden Schlauches und damit auch des Mundpflegegerätes gewährleistet. Darüber hinaus wird auch eine erhöhte Fehlersicherheit erreicht, da eine Reduzierung der elektrischen oder optischen Verbindungsmittel zwischen dem Handstück und der Basiseinheit auch zu einer Reduzierung der Fehlermöglichkeiten, insbesondere elektrischer Leitungsbruch, führt. Dadurch, daß eine Betätigung des Betätigungsmittels umgesetzt wird in Potentialänderungen von Steuerleitungen zur Steuerung des Ein/Aus-Zustandes bzw. zur Variation eines Sollwertes für die Betriebsleistung der Vorrichtung, werden elektrische Mittel zur Realisierung vorgestellt, die äußerst einfach aufgebaut und störungsunanfällig sind. Durch den Einsatz einer Komparatorfunktion zwischen wenigstens einer Steuerleitung und einem der elektrischen Leiter wird in vorteilhafter Weise dafür gesorgt, daß durch eine Betätigung des entsprechenden Betätigungsmittels jeweils nur diejenige Steuerleitung angesteuert wird, die den Schaltern, insbesondere dem Schaltschieber bzw. dem Schalttaster zugeordnet ist. Weitere Vorteile der Erfindung ergeben sich aus der Beschreibung der Ausführungsbeispiele in Verbindung mit den Figuren.

Es zeigen:

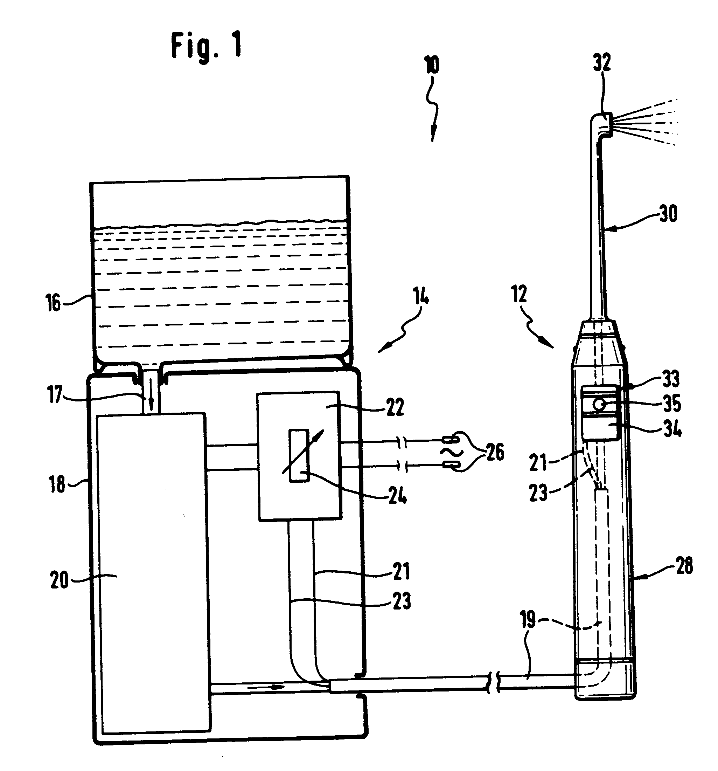

- Fig. 1: eine Prinzipdarstellung einer Munddusche,
- Fig. 2 a, b: einen Längsschnitt durch das Gehäuse des Griffteils der Munddusche sowie eine entsprechende Seitenansicht, wobei nur der Gehäuseteil im Bereich des Betätigungsmittels dargestellt ist und
- Fig. 3: ein Blockschaltbild zur Erläuterung des Funktionsprinzips der elektrischen Einrichtungen der Munddusche.

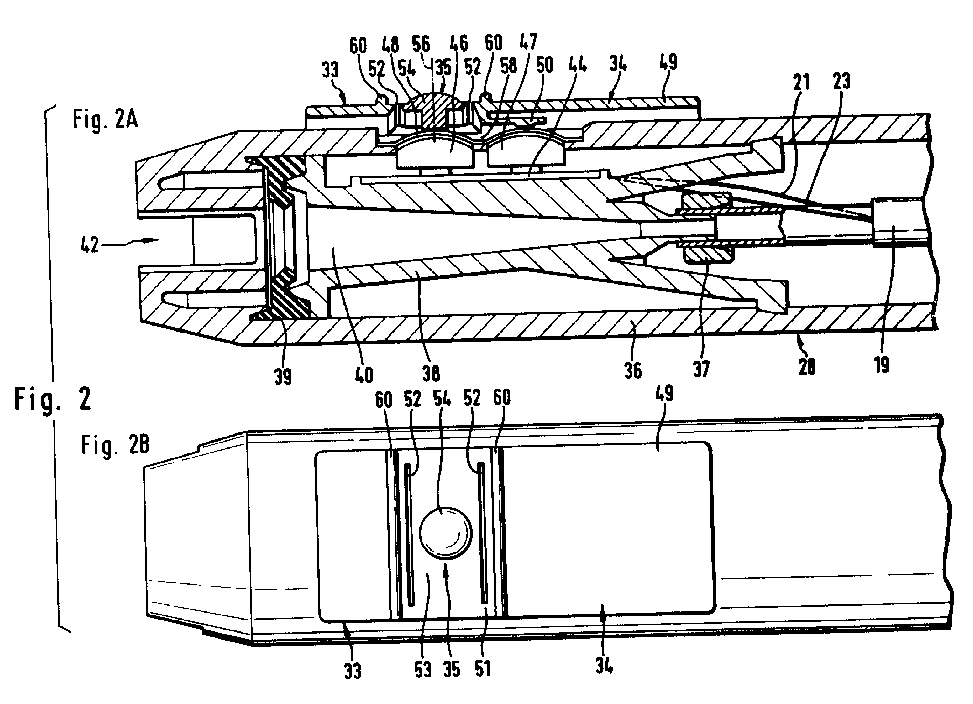

Eine Munddusche 10 besteht aus einen Handstück 12 und einer Basiseinheit 14. Aus einem Wasserbehälter 16, der auf die Basiseinheit 14 aufgesetzt ist, gelangt über eine Einlaßleitung 17 das Wasser in eine Pumpeneinheit 20, die in einem Gehäuse 18 der Basiseinheit 14 angeordnet ist. Aus der Pumpeneinheit 20 tritt das Wasser durch einen Schlauch 19 aus, der zu dem Handstück 12 führt. Im Gehäuse 18 ist ein elektrischer Regelkreis 22 zur Steuerung oder Regelung der Pumpeneinheit 20, die aus einer Pumpe und einem Elektromotor besteht, vorgesehen. Der Regelkreis 22 kann durch ein schematisch dargestelltes, an der Basiseinheit 14 vorgesehenes, Stellglied 24 vom Benutzer auf einen bestimmten Sollwert für die Spritzstärke der Munddusche eingestellt werden. Über einen Netzanschluß 26 wird die Basiseinheit 14 an die Versorgungsspannung angeschlossen. In der Schlauchwandung des Schlauches 19 sind zwei elektrische oder optische, oder sonstige Leiter 21, 23 eingebettet, die einerseits mit dem Regelkreis 22 in der Basiseinheit 14 und andererseits mit einer Schaltereinheit 44 (Fig. 2) im Griffteil 28 des Handstücks 12 verbunden sind. An das Griffteil 28 ist ein Spritzdüsenteil 30 mit einer Düse 32 ankoppelbar, aus der das durch den Schlauch 19 dem Handstück 12 zugeführte Fluid ausbringbar ist. Am Griffteil 28 ist ein Betätigungsmittel 33 verschiebbar angeordnet. Das Betätigungsmittel 33 besteht aus einem Schaltschieber 34 und einem integrierten Schalttaster 35, kann aber auch durch sonstige Schaltfunktionen, wie Kippschalter, Wippschalter oder ähnliches realisiert sein.

Einzelheiten zum Aufbau und zu der Funktion des Betätigungselementes sind der Figur 2 zu entnehmen. Das Griffteil 28 besteht im wesentlichen aus einem Gehäuse mit einer Gehäusewand 36, welches in seinem Inneren einen Gehäuseeinsatz 38 aufnimmt. Mittels eines Klemmkörpers 37 ist der Schlauch 19 an einem Stutzen des Gehäuseeinsatzes 38 befestigt. Eine zentrale Durchbrechung 40 des Gehäuseeinsatzes 38 mündet im Bereich einer Ringdichtung 39 am Kopfende des Griffteils 28. Dort sind Kupplungsmittel 42 zur Ankoppelung des Spritzdüsenteils 30 an das Griffteil 28 vorgesehen.

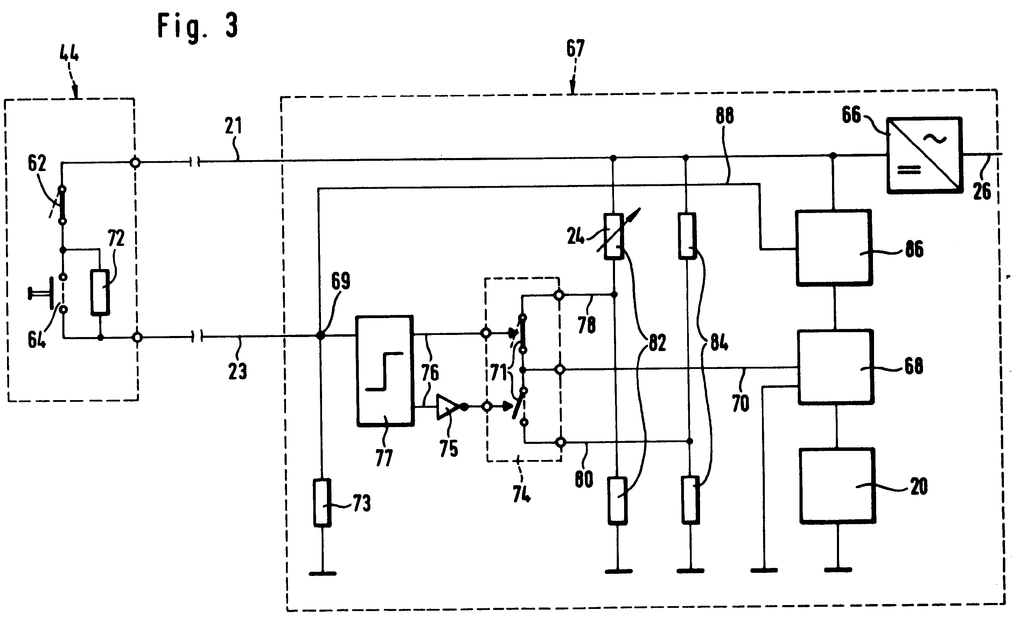

Gegenüberliegend von zwei Stößeln 46, 47, die in Durchbrechungen der Gehäusewand 36 aufgenommen sind, ist eine Schalteinheit 44 an dem Gehäuseeinsatz 38 befestigt. Im vorliegenden Ausführungsbeispiel ist die Schalteinheit durch Dickschichtschalter realisiert. Es versteht sich jedoch, daß jegliche elektrische Schalter verwendet werden können, also insbesondere auch Mikroschalter, sofern ihre Baugröße dem zur Verfügung stehenden Platz angemessen ist. Mittels der Stößel 46 und 47 sind die Kontakte zweier Schalter 62 und 64 (Fig. 3) der Schalteinheit 44 betätigbar. Geführt werden die Stößel 46, 47 durch die Seitenwandung der Durchbrechungen in der Gehäusewand 36. Oberhalb der Stößel 46 und 47 erstreckt sich eine Folie 48, die schmutz- und feuchtigkeitsundurchlässig mit der Gehäusewand 36 verbunden ist. Die Folie 48 dichtet das Gehäuse im Bereich der Stößel 46 und 47 ab, so daß weder Schmutz noch Feuchtigkeit in den Innenraum des Griffteils 28 gelangen kann. Oberhalb der Stößel 46, 47 ist das Betätigungsmittel 33 an der Gehäusewand 36 verschiebbar gelagert. Die Befestigungsmittel zur Festlegung des Betätigungsmittels 33 an der Gehäusewand 36 des Griffteils 28 sind in den Figuren nicht näher dargestellt. Beispielsweise können an der Unterseite des Betätigungsmittels 33 angeformte Nasen oder Lappen in Führungsnuten der Gehäusewand 36 rastend eingreifen oder andere herkömmliche Befestigungsmethoden gewählt werden.

Das Betätigungsmittel 33 ist als in etwa rechteckförmige Platte 49 ausgebildet, die der Krümmung der Gehäusewand 36 angepaßt ist. Auf der Unterseite der Platte 49 ist eine federnde Zunge 50 angeformt, die in der dargestellten Ein-Position des Betätigungselementes 33 zentral auf den Stößel 47 sowie den zugeordneten Schalter 62 (Fig. 3) wirkt. Dieser als Schaltschieber 34 bezeichnete Teil des Betätigungsmittels 33 zur Betätigung des Schalters 62 dient zum Ein/Aus-Schalten der Munddusche 10.

Zwischen zwei auf der Platte 49 vorgesehenen Querstegen 60, die eine Handhabung des Betätigungsmittels 33 erleichtern, sind zwei zu den Querstegen 60 parallel verlaufende Durchbrechungen 52 vorgesehen. Die Durchbrechungen 52 erstrecken sich nicht über die gesamte Querausdehnung der Platte 49, sondern enden in einem Randbereich 51 der Platte 49. Der Bereich zwischen den Durchbrechungen 52 formt eine Fläche in Form eines Streifens 53 mit federelastischen Eigenschaften. Zur Erleichterung der Betätigung des Schalttasters 35, der durch den Streifen 53 gebildet wird, ist im Zentrum des Streifens 53 eine knopfartige Erhöhung 54 vorgesehen. Durch Druckausübung auf den Schalttaster 35 ist der Stößel 46 und damit der Schalter 64 (Fig. 3) der Schalteinheit 44 betätigbar. Eine Betätigung des Schalters 64 ist jedoch nur dann möglich, wenn sich der Schaltschieber 34 in der in Fig. 2 dargestellten Ein-Position befindet. In der Aus-Position, in der das Betätigungsmittel 33 in Richtung des Fußendes des Griffteils 28 geschoben wird, bis sich eine Mittelachse 56 des Schalttasters 35 im Mittelbereich 58 zwischen den Stößeln 46 und 47 befindet, ist eine Betätigung des Schalters 64 durch den Schalttaster 35 nicht möglich. In der Aus-Position des Betätigungsmittels 33 liegt auch die Zunge 50 des Schaltschiebers 34 seitlich neben dem Stößel 47, so daß der Schalter 62 in eine Offen-Stellung gelangt und die Munddusche 10 ausgeschaltet ist.

Die Funktionsweise der Anordnung ist wie folgt:

Zum Einschalten der Munddusche 10 wird das Betätigungsmittel 33 bzw. der Schaltschieber 34 in die Ein-Position verschoben, so daß die Zunge 50 wie in Fig. 2 dargestellt, über den Stößel 47 den Schalter 62 betätigt und wie noch näher anhand von Fig. 3 erläutert, die Pumpeneinheit 20 in Betrieb setzt. Die Pumpeneinheit 20 erzeugt in Abhängigkeit von der Einstellung des Stellgliedes 24 eine dem jeweiligen Benutzer angepaßte Spritzstärke des aus der Düse 32 am Handstück 12 austretenden Flüssigkeitsstrahls. Hält der Benutzer eine Veränderung der Spritzstärke des Reinigungsstrahls für erforderlich, beispielsweise eine Erhöhung zur Entfernung von festsitzenden Speiseresten in den Zahnzwischenräumen, so kann er durch eine Betätigung des Schalttasters 35 die Spritzstärke des Reinigungsstrahls auf einen fest eingestellten, insbesondere einen Maximalwert erhöhen, und zwar solange, wie der Schalttaster 35 betätigt wird. Nach der erfolgreichen Entfernung der hartnäckig festsitzenden Speisereste beendet der Benutzer die Betätigung des Schalttasters 35, so daß sich die Spritzstärke der Munddusche selbsttätig wieder auf den durch das Stellglied 24 individuell angewählten Wert zurückstellt. Durch das erfindungsgemäße Betätigungsmittel 33 ist somit neben einem Ein/Aus-Schalten der Munddusche 10 auch eine kurz- oder längerfristige Variation eines Betriebsparameters, im vorliegenden Ausführungsbeispiel insbesondere eine Erhöhung der Spritzstärke der Munddusche 10 durch Einhandbetätigung des Betätigungsmittels 33 am Handstück 12 möglich. Natürlich kann diese Funktion auch durch zwei separat am Handstück 12 angeordnete Schalter 34, 35 realisiert werden.

Anhand des Blockschaltbildes der Figur 3 wird im folgenden die Ausgestaltung der elektrischen Schaltung der beiden durch den Schaltschieber 34 und den Schalttaster 35 betätigbaren Schalter 62 und 64 der Schalteinheit 44 erläutert. Ein besonderer Aspekt dieser Schaltung liegt in der Tatsache, daß die elektrische Verbindung zwischen dem Handstück 12 und der Basiseinheit 14 lediglich durch zwei elektrische Leiter 21, 23 hergestellt wird, wobei dennoch eine Variation wenigstens zweier Betriebsparameter, nämlich des Parameters Ein/Aus-Schalten und des Parameters Spritzstärke bzw. Betriebsleistung der Pumpeneinheit, möglich ist. die Schaltungsanordnung besteht aus zwei Teilen, nämlich der im Griffteil 28 untergebrachten Schalteinheit 44, bestehend aus den Schaltern 62 und 64, wobei dem Schalter 64 ein Widerstand 72 parallelgeschaltet ist und dem Schaltkreis 67, der in der Basiseinheit 14 vorgesehen ist. Die beiden Einheiten sind elektrisch mittels der Leiter 21 und 23 sowie mechanisch über den Schlauch 19 verbunden. Der Schaltkreis 67 beinhaltet einen Gleichrichter 66 zur Gleichspannungsversorgung, der über einen Netzanschluß 26 an die Versorgungswechsel spannung anschließbar ist. Das Ausgangspotential des Gleichrichters 66 wird über den elektrischen Leiter 21 auf den einen Kontakt des Schalters 62 geführt. Der Schalter 62, der Schalter 64 und ein Widerstand 73 bilden in dieser Reihenfolge eine Serienschaltung, deren Fußpunkt auf einem Bezugspotential, insbesondere Massepotential, liegt. Durch die Schaltung des Widerstandes 72 parallel zum Schalter 64 variiert das Potential der elektrischen, vom Schalter 64 abzweigenden Leitung 23 bzw. eines Referenzpunktes 69 innerhalb des Schaltkreises 67 wie folgt. Ist der Schalter 62 geöffnet - dies entspricht der Aus-Stellung der Munddusche 10 - , so liegt der Bezugspunkt 69 auf Massepotential, unabhängig davon, ob Schalter 64 geöffnet oder geschlossen ist. Wird der Schalter 62 bei geöffnetem Schalter 64 geschlossen, nimmt das Potential am Bezugspunkt 69 solche Werte an, die durch das Verhältnis des Spannungsteilers, gebildet durch die Widerstände 72 und 73, bestimmt sind. Wird zusätzlich zu dem geschlossenen Schalter 62 auch der Schalter 64 geschlossen, erhöht sich das Potential am Bezugspunkt 69 durch die Überbrückung des Widerstandes 72 auf einen maximalen, durch das Ausgangspotential des Gleichrichters 66 bestimmten Wert. Der durch das Spannungsteilerverhältnis der Widerstände 72, 73 bestimmte Wert und auch jeder höhere Wert am Bezugspunkt 69 ist ausreichend, um eine Stand-by-Einheit 86 über eine Steuerleitung 88, die mit dem Bezugspunkt 69 verbunden ist, in den Ein-Zustand zu schalten und die ihrerseits einen Regelkreis 68 und die daran angeschlossene Pumpeneinheit 20 in Betrieb setzt. Dem Regelkreis 68 wird der Sollwert für die Pumpleistung über eine Sollwert-Signalleitung 70 zugeführt. Eingestellt wird dieser Sollwert über das Widerstandsteilerverhältnis eines Spannungsteilers 82, an dem die Versorgungsspannung anliegt. Einer der Widerstände des Spannungsteilers 82 wird durch einen variablen Widerstand, nämlich das Stellglied 24, gebildet. In Abhängigkeit von der Einstellung des Stellgliedes 24, welches durch den Benutzer an der Basiseinheit 14 individuell einstell bar ist, kann der Ausgangsdruck der Pumpeneinheit 20 und damit die Spritzstärke der Düse 32 auf bestimmte, dem Benutzer angenehme Werte festgelegt werden. Dieser Signalsollwert wird dem Eingang eines ersten Schalters 71 zugeführt. Der Eingang eines zweiten Schalters 71 ist mit dem Mittelabgriff eines zweiten Spannungsteilers 84, der ebenfalls mit der Versorgungsspannung beaufschlagt ist, verbunden. Während mit dem ersten Spannungsteiler 82 ein variabler Sollwert einstellbar ist, ist der zweite Spannungsteiler 84 derart dimensioniert, daß er einen Fest-Sollwert liefert, der z.B. in etwa einer maximalen Pumpleistung und damit einer maximalen Spritzstärke entspricht. Die Ausgänge der beiden Schalter 71 sind zusammengelegt und über die Sollwert-Signalleitung 70 mit dem Regelkreis 68 verbunden. Die Schalter 71 sind beispielweise Bestandteil eines Analogmulitplexers 74 und können elektrisch durch Steuerleitungen 76 in den Ein/Aus-Zustand gesteuert werden. Die beiden Schalter 71 werden durch Zwischenschaltung eines Inverters 75 in einer der beiden Steuerleitungen 76 komplementär angesteuert, so daß nur jeweils eine der beiden Schalter 71 geschlossen und der andere geöffnet ist. Zwischen dem elektrischen Leiter 23 und den Steuerleitungen 76 ist eine Diskriminator- bzw. Komparatorfunktion 77 geschaltet. Die interne Schaltschwelle der Komparatorfunktion 77 ist mit einem Logikpegel so gelegt, daß diese ihren digitalen Ausgangszustand bzw. das Potential der Steuerleitungen 76 von 1 auf 0 bzw. umgekehrt dann ändert, wenn der Wert des Eingangspotentials am Bezugspunkt 69 sich von dem durch das Spannungsteilerverhältnis der Widerstände 72 und 73 vorgegebenen Wert auf den Versorgungsspannungswert erhöht. Dieser Potentialsprung am Bezugspunkt 69 findet genau dann statt, wenn bei geschlossenem Schalter 62 zusätzlich der Schalter 64 durch den Schalttaster 35 betätigt wird. Ist lediglich der Schalter 62 geschlossen, bewirkt das Potentialniveau der Steuerleitungen 76, daß die Signale einer Signalleitung 78, die mit dem Mittelabgriff des Spannungsteilers 82 verbunden ist, über einen der Schalter 71 auf die Sollwert-Signalleitung 70 geschaltet werden. Durch Schließen des Schalters 64 erhöht sich das Potential am Bezugspunkt 69 auf das Niveau der Versorgungsspannung und die Steuerleitungen 76 werden mittels der Komparatorfunktion 77 komplementär umgeschaltet. In diesem Fall wird die Signalleitung 80, die an dem Mittelabgriff des Spannungsteilers 84 angeschlossen ist, mit der Sollwert-Signalleitung 70 verbunden. Aus dieser Beschreibung folgt, daß die Sollwert-Signalleitung 70 je nach Stellung des Schalters 64 bei jeweils geschlossenem Schalter 62 mit unterschiedlichen Sollwerten beaufschlagt wird, die durch das Spannungsteilerverhältnis der Spannungsteiler 82 bzw. 84 bestimmt werden. Dabei entspricht der durch den Spannungsteiler 84 bestimmte Sollwert insbesondere einem Maximalwert der Pumpleistung bzw. Spritzstärke, der dann zum Tragen kommt, wenn bei eingeschaltetem Gerät der Druckschalter 64 mittels des Schalttasters 35 betätigt wird. Bei geöffnetem Schalter 64 wird die Pumpleistung bzw. die Spritzstärke durch das Spannungsverteilerverhältnis des variablen Spannungsteilers 82 bestimmt, das mittels des Stellgliedes 24 an der Basiseinheit 14 variiert werden kann. Natürlich können die Spannungsteiler 82, 84 auch mit der Motorspannung versorgt werden, wodurch eine Abhängigkeit des Sollwertes von der Motordrehzahl erreicht und eine Regelung der Motordrehzahl ermöglicht wird. Die vorliegende Erfindung ist nicht auf die spezielle Anwendung bei Mundduschen beschränkt, sondern kann bei allen Geräten zur Mundpflege zur Anwendung kommen, bei denen eine Einhandverstellung von zwei Betriebsparametern erforderlich ist. Die elektronische Schaltung erweist sich insbesondere dann als vorteilhaft, wenn es erforderlich bzw. angezeigt ist, in einer Munddusche eine möglichst geringe Anzahl von elektrischen Leitern zwischen einem Handstück und einer Basiseinheit vorzusehen. Eine minimale Anzahl von elektrisch leitenden Verbindungen ist aus Gründen der Funktionssicherheit und der im vorliegenden Beispiel recht aufwendigen Anordnung der elektrisch leitenden Verbindungen an der Seitenwandung eines wasserführenden Schlauches erforderlich.

## Patentansprüche

1. Munddusche mit einer Basiseinheit (14), welche eine Pumpeneinheit (20) zur Förderung einer Flüssigkeit und eine elektrische Steuerung der Pumpeneinheit (20) umfaßt, und mit einem Handstück (12), welches über einen Schlauch (19) und Leiter (21, 23) mit der Basiseinheit (14) verbunden ist, wobei das Handstück (12) eine Flüssigkeitsaustrittsöffnung und ein Betätigungsmittel (33) zur Variation der Fördermenge der Pumpeneinheit (20) aufweist, dadurch gekennzeichnet, daß mittels des Betätigungsmittels (33) wenigstens zwei Schalter (62, 64) zur Beeinflussung der elektrischen Steuerung betätigbar sind, wobei der erste Schalter (62) zum Ein-/Ausschalten der Pumpeneinheit (20) und der zweite Schalter (64) zur Einstellung eines bestimmten, voreingestellten, insbesondere maximalen Fördermengenwertes der Pumpeneinheit (20) dient.

2. Munddusche nach Anspruch 1, dadurch gekennzeichnet, daß der zweite Schalter (64) mittels des Betätigungsmittels (33) nur dann betätigbar ist, wenn das Betätigungsmittel (33) eine Positionierung aufweist, in der die Pumpeneinheit (20) mittels des ersten Schalters (62) in den Ein-Zustand geschaltet ist.

3. Munddusche nach Anspruch 2, dadurch gekennzeichnet, daß das Betätigungsmittel (33) als Schaltschieber (34) und Schalttaster (35) einstückig ausgebildet ist.

4. Munddusche nach Anspruch 3, dadurch gekennzeichnet, daß das Betätigungsmittel (33) als der Krümmung einer Gehäusewand (36) des Handstücks (12) angepaßte, an der Gehäusewand (36) geführte Platte (49) ausgebildet ist, die mit sich über einen Teilbereich der Platte erstreckenden, einander gegenüberliegenden, schlitzförmigen Durchbrechungen (52) versehen ist.

5. Munddusche nach Anspruch 4, dadurch gekennzeichnet, daß ein Bereich zwischen Durchbrechungen (52) der Platte (49) dem Schalttaster (35) und ein Federelement dem Schaltschieber (34) zugeordnet ist.

6. Munddusche nach einem der Ansprüche 1 bis 4, dadurch gekennzeichnet, daß der zweite Schalter (64) vorrangig gegenüber allen anderen Stellmitteln (24) auf die Betriebsleistung wirkt.

7. Munddusche nach einem der Ansprüche 1 bis 6, dadurch gekennzeichnet, daß das Handstück (12) mit der Basiseinheit (14) über zwei elektrische Leiter (21, 23) verbunden ist.

8. Munddusche nach Anspruch 7, dadurch gekennzeichnet, daß durch Verschieben des ersten Schalters (62) das Potential einer Steuerleitung (88) veränderbar ist, die Steuerung des Gerätes in den Ein/Aus-Zustand dient.

9. Munddusche nach Anspruch 7 oder 8, dadurch gekennzeichnet, daß durch Drücken des Schalttasters (35) das Potential einer Steuerleitung (76) zur Festlegung des Schaltzustandes von Schaltern (71) veränderbar ist und die Schalter (71) einen Sollwert der Betriebsleistung der Vorrichtung variieren.

10. Munddusche nach einem der Ansprüche 7 bis 9, dadurch gekennzeichnet, daß die Steuerleitungen (76, 88) wenigstens mittelbar mit einem der elektrischen Leiter (21, 23) verbunden sind, wobei zwischen wenigstens einer Steuerleitung (76, 88) und einem der elektrischen Leiter (21, 23) eine Komparatorfunktion (77) geschaltet ist.

11. Munddusche nach wenigstens einem der vorhergehenden Ansprüche, dadurch gekennzeichnet, daß der zweite Schalter (64) zum zeitweiligen Einstellen eines vom Normalwertabweichenden, vorgegebenen oberen Wertes der Spritzstärke dient.

12. Munddusche nach Anspruch 11, dadurch gekennzeichnet, daß der obere Wert der Spritzstärke der Munddusche (10) unabhängig von der Einstellung anderer Stellmittel (24) zur Beeinflussung der Spritzstärke durch das Betätigungsglied (33) einstellbar ist.

## Claims

1. An oral irrigating apparatus, with a base unit (14) which comprises a pump unit (20) for the delivery of a fluid and an electrical control of said pump unit (20), and with a hand-held unit (12) which is connected to said base unit (14) by means of a hose (19) and conductors (21, 23), with said hand-held unit (12) including a fluid outlet orifice and an operating means (33) for varying the amount of fluid delivered by said pump unit (20, characterized in that at least two switches (62, 64) for operating on said electrical control are actuatable by said operating means (33), with said first switch (62) serving to turn said pump unit (20) on and off, and said second switch (64) serving to adjust the amount of fluid delivered by said pump unit (20) to a specific predetermined, in particular maximum value.

2. The oral irrigating apparatus as claimed in claim 1, characterized in that said second switch (64) is actuatable by means of said operating means (33) only when said operating means (33) is in a position in which said pump unit (20) is in its On condition produced by said first switch (62).

3. The oral irrigating apparatus as claimed in claim 2, characterized in that said operating means (33) is integrally formed, providing a slide switch (34) and a non-locking pushbutton (35).

4. The oral irrigating apparatus as claimed in claim 3, characterized in that said operating means (33) is configured as a plate structure (49) conformed to the curvature of a casing wall (36) of said hand-held unit (12), said plate structure being guided along said casing wall (36) and being provided with opposite slotted apertures (52) extending over a partial area of said plate structure.

5. The oral irrigating apparatus as claimed in claim 4, characterized in that an area between said apertures (52) of said plate structure (49) is associated with said non-locking pushbutton (35), and a resilient member is associated with said slide switch (34).

6. The oral irrigating apparatus as claimed in any one of the claims 1 to 4, characterized in that said second switch (64) operates on the operating power, overriding any other actuation device (24).

7. The oral irrigating apparatus as claimed in any one of the claims 1 to 6, characterized in that said base unit (14) is connected to said hand-held unit (12) by means of two electrical conductors (21, 23).

8. The oral irrigating apparatus as claimed in claim 7, characterized in that the potential of a control line (88) serving to control the On/Off condition of the apparatus is variable by displacement of said first switch (62).

9. The oral irrigating apparatus as claimed in claim 7 or 8, characterized in that the potential of a control line (76) serving to determine the condition of switches (71) is variable by pushing said non-locking pushbutton (35), and that said switches (71) vary a set point of the operating power of the apparatus.

10. The oral irrigating apparatus as claimed in any one of the claims 7 to 9, characterized in that said control lines (76, 88) are at least indirectly corrected to one of said electrical conductors (21, 23), with a comparator function (77) being provided between at least one of said control lines (76, 88) and one of said electrical conductors (21, 23).

11. The oral irrigating apparatus as claimed in at least one of the preceding claims, characterized in that said second switch (64) serves the function of temporarily adjusting the jet pressure to a predetermined upper value deviating from the normal value.

12. The oral irrigating apparatus as claimed in claim 11, characterized in that said upper value of the jet pressure of said oral irrigating apparatus (10) is adjustable by said operating means (33) independent of the adjustment of any other actuation device (24) for operating on the jet pressure.

## Revendications

1. Douche buccale avec une unité de base (14), qui comprend une unité de pompe (20) servant à transporter un liquide et une commande électrique de l'unité de pompe (20), et avec une pince à tenir ( 12) qui est reliée par un flexible (19) et un conducteur (21, 23) à l'unité de base (14), la pièce à tenir (12) présentant un orifice de sortie de liquide et un moyen d'actionnement (33) permettant de modifier le débit de transport de l'unité de pompe (20), caractérisé en ce que le moyen d'actionnement (33) permet d'actionner au moins deux contacteurs (62, 64) pour modifier la commande électrique, le premier contacteur (62) servant à brancher et débrancher l'unité de pompe (20) et le second contacteur (64) servant à régler une valeur définie et prédéterminée du débit de transport de l'unité de pompe (20), et en particulier une valeur maximale de ce débit de transport.

2. Douche buccale selon la revendication 1, caractérisée en ce que le second contacteur (64) ne peut être actionné à l'aide du moyen d'actionnement (33) que lorsque le moyen d'actionnement (33) présente une position dans laquelle l'unité de pompe (20) a été branchée à l'aide du premier contacteur (62).

3. Douche buccale selon la revendication 1, caractérisée en ce que le moyen d'actionnement (33) présente la forme d'un contacteur à glissière (34) et d'un contacteur à touche (36) intégrés en une seule pièce.

4. Douche buccale selon la revendication 3, caractérisée en ce que le moyen d'actionnement (33) présente la forme d'une plaque (49) s'adaptant à la courbure d'une paroi (36) du boîtier de la pièce à tenir (12) et guidée sur la paroi (36) du boîtier, cette plaque (49) étant dotée de découpes (52) en forme de fente s'étendant sur une partie de la plaque et en face l'une de l'autre.

5. Douche buccale selon la revendication 4, caractérisée en ce qu'une zone située entre des découpes (52) de la plaque (49) est associée au contacteur à touche (35) et qu'un élément de ressort est associé au contacteur à glissière (34).

6. Douche buccale selon un des revendications 1 à 4, caractérisée en ce que le second contacteur (64) agit sur la puissance de fonctionnement de manière prioritaire sur tous les autres moyens de réglage (24).

7. Douche buccale selon l'une des revendications 1 à 6, caractérisée en ce que la pièce à tenir (12) est reliée à l'unité de base (14) par deux conducteurs (21, 23).

8. Douche buccale selon la revendication 7, caractérisée en ce que le potentiel d'un conducteur de commande 88, qui sert à placer l'appareil en position de marche ou d'arrêt, peut être modifié par déplacement du premier contacteur 62.

9. Douche buccale selon la revendication 7 ou 8, caractérisée en ce que le potentiel d'un conducteur de commande (76) servant à déterminer l'état de commutation de commutateurs (71) peut être modifié par pression sur le contacteur à touche (35) et en ce que les contacteurs (71) font varier une valeur de consigne de la puissance de fonctionnement du dispositif.

10. Douche buccale selon l'une des revendications 7 à 11, caractérisée en ce que les conducteurs de commande (76, 88) sont reliés au moins indirectement à un des conducteurs électriques (21, 23), un circuit comparateur (77) étant branché entre au moins un conducteur de commande (76, 88) et une des conducteurs électriques (21, 23).

11. Douche buccale selon au moins l'une des revendications précédentes, caractérisée en ce que le second contacteur (64) sert à établir temporairement une valeur prédéterminée, plus élevée et différentes d'une valeur normale, de la force de projection.

12. Douche buccale selon la revendication 11, caractérisée en ce que la valeur supérieure de la force de projection de le douche buccale (10) peut être réglée par l'élément d'actionnement (33) indépendamment du réglage défini par les autres moyens de réglage (24), pour modifier la force de projection.
